# EUROPÄISCHE PATENTSCHRIFT

(11) **EP 2 505 449 B1**
(45) Veröffentlichungstag und Bekanntmachung des Hinweises auf die Patenterteilung: **15.06.2016**
(21) Anmeldenummer: 12161496.0
(22) Anmeldetag: 27.03.2012
(51) Int. Cl.: B61D 17/12, F16B 37/04

(54) **Gewindeträger mit Halteblock**
Thread carrier with holding block
Support fileté avec bloc d'ancrage

(30) Priorität: 30.03.2011 DE 102011006465
(43) Veröffentlichungstag der Anmeldung: 03.10.2012
(73) Patentinhaber: Bombardier Transportation GmbH, 10785 Berlin (DE)
(72) Erfinder: Eisold, Thomas, 01833 Dürrröhrsdorf-Dittersbach OT Dobra (DE); Mehnert, Claus, 02694 Großdubrau (DE); Lehmann, Frank Michael, 02625 Bautzen (DE)
(74) Vertreter: Patentanwälte Bressel und Partner mbB

(56) Entgegenhaltungen:
- DE-C- 694 307
- DE-U1- 20 217 838
- DE-U1- 29 804 397
- US-A1- 2004 033 121

## Beschreibung

Die vorliegende Erfindung betrifft einen Gewindeträger, insbesondere zum Einsatz in Schienenfahrzeugen, sowie ein Verfahren zur Befestigung von Komponenten auf dem Dach eines Schienenfahrzeugs.

Bei der Konstruktion von Schienenfahrzeugen werden vielfach Schraubverbindungen mit Kontermuttern eingesetzt.

Beim Hineindrehen einer Schraube in eine Schraubenmutter, und auch beim Hinausdrehen, ist das Mitdrehen der Schraubenmutter zu vermeiden. Aus Platzgründen oder anderen Gründen kann die Schraubenmutter nicht immer mit Werkzeugen festgehalten werden.

Verschiedene Gewindeträger-Varianten zur Lösung dieses Problems sind aus dem Stand der Technik bekannt, wie beispielsweise Käfigmuttern, Anschweißmuttern und Nutensteine.

Aus dem Stand der Technik sind sogenannte Käfigmuttern bekannt. Eine Käfigmutter ist eine meist quadratische Mutter aus Stahl mit einem Gewinde in der Mitte, die in einem Käfig aus Blech eingefasst ist, sodass dadurch jegliches Mitdrehen der Mutter beim Anziehen der Schraube ausgeschlossen wird. Käfigmuttern werden vor allem bei der Befestigung von Geräten in 19-Zoll-Racks verwendet, beispielsweise für Komponenten von Servern, Netzwerkverteilen oder Laborgeräten. Käfigmuttern sind aber nicht für beliebige Größen und Festigkeitsklassen erhältlich und eine Entnahme der Mutter aus dem Käfig zwecks Austausch ohne Zerstörung des Käfigs ist in der Regel nicht mehr möglich. DE1930609 U beschreibt eine Käfigmutter mit einem Stahlrahmen, in dem eine Mutter aus Stahlblech bzw. federndem Material ihre Aufnahme findet. US20040033121A1 offenbart einen Käfigteil einer Käfigmutter, der in das Material des Käfigteils eingestanzte Vorsprünge aufweist.

Eine Anschweißmutter wird mittels einer Schweißverbindung auf einer Unterlage befestigt, die sich beim Anziehen einer Schraube nicht mitdrehen kann, sodass die Mutter durch die Schweißverbindung nicht verdrehbar gehalten wird. Der Nachteil ist, dass die Schweißverbindung permanent ist und eine einmal angeschweißte Mutter nicht mehr austauschbar ist.

Weitere Anordnungs- und Befestigungsmöglichkeiten für eine Schraubenmutter sind in DE29804397U1 und DE694307C beschrieben. DE694307C zeigt eine Annietmutter mit einer mit einem Annietflansch versehenen Kappe, in der eine Schraubenmutter nicht drehbar, aber verschiebbar, und ein den Schraubenbolzen sichernder Federring untergebracht sind. Die Kappe hält mit ihrem unteren eingezogenen Rand den Federring und ist als besonderer Teil nicht drehbar in den Annietflansch eingesetzt. DE29804397U1 betrifft eine Verbindungsanordnung zweier Bauteile, mit einem Querverbinder, bei der in einem ersten Bauteil eine Verbindungsschraube mit einem Widerlager gehalten und mit einer Verbindungsmutter zusammengeschraubt ist, die in einem zweiten Bauteil mit einer Durchstecköffnung für die Verbindungsschraube fluchtend quer in einen Einsteckschlitz hineingesteckt ist Die Verbindungsmutter ist in dem Einsteckschlitz mit einem elastischen Halteteil zusammengebaut, das die Verbindungsmutter in Einschraubstellung zur durchgesteckten Verbindungsschraube hält.

Aus dem Stand der Technik sind auch sogenannte Nutsteine bekannt, mittels der man an einer Profilschiene Anbauteile festlegen kann.

DE 29713008 U1 beschreibt einen Nutenstein mit einer Oberseite, einer Unterseite und einem Rand zwischen diesen, einer sich von der Oberseite zur Unterseite erstreckenden Bohrung und einer konzentrisch zu dieser angeordneten nichtrunden Ausnehmung in der Oberseite zur drehfesten Aufnahme einer Schraube.

Die für diese Erfindung gattungsbildende DE 20217838 U1 beschreibt einen Nutstein zur Befestigung von Elementen an einer Profilschiene bestehend aus einem Formteil, welches sich im gelösten Zustand in einer C-förmig profilierten Schiene verschieben lässt, wobei sich im verspannten Zustand das Formteil gegen die aufeinander zugerichteten Schenkelenden des C-Profils presst. Das Formteil weist im Wesentlichen eine Quaderform auf, mit einer Ausnehmung sowie einem Durchbruch zur Aufnahme eines Schraubenkopfes oder einer Mutter. Der Quader ist derart profiliert, dass er sich in einer ersten Lage von seinen Längsseiten her zwischen die Schenkelenden einfügen lässt, und dass er sich durch eine Verschwenkung in einer zweiten Lage im Nutbereich der Profilschiene festsetzen lässt.

Bei der Verwendung von Nutensteinen treten andere Nachteile auf: Aus Sicherheitsgründen werden wieder entfernbare Verbindungselemente wie Schrauben, Muttern und Scheiben getauscht, wenn eine Verschraubung wieder gelöst wird. Werden bei einer Schraubverbindung herkömmliche Nutensteine eingesetzt, die auf Zug belastet wurden, so müssen auch diese getauscht werden. Nutensteine sind auf Grund der aufzunehmenden Belastungen häufig Sonderteile aus sehr festen Werkstoffen, beispielsweise Spezialstahl, sodass ein Tausch mit hohen Kosten verbunden ist.

Ein weiteres Problem besteht darin, dass bei einer Schraube-Mutter-Verbindung insbesondere beim Befestigen von Komponenten auf dem Dach eines Schienenfahrzeugwagens die Mutter oftmals nicht von der Dachunterseite gegengehalten werden kann, da die Dachabdeckung des Wagenkastens oftmals schon geschlossen ist wenn die Montage der Geräte erfolgen soll. Die Montage von Komponenten wie Klimaanlagen, Dachstromabnehmern, Energiespeichern oder Antriebseinrichtungen gestaltet sich daher als schwierig. Zudem erfordern diese Komponenten schon aufgrund ihrer Masse eine stabile Verbindung zum Dach, bei der Schrauben und Muttern hoher Festigkeitsklassen erforderlich sind. Bei bisherigen Lösungen sind, wie zuvor beschrieben, beliebige Festigkeitsklassen nicht immer realisierbar und/oder die Mutter kann nicht auf einfache Weise ausgetauscht werden. Ein Austausch der Mutter(n) ist von Zeit zu Zeit erforderlich und insbesondere bei der Wartung und dem Austausch von Komponenten sehr wünschenswert, wenn auch die Verbindung zum Dach erneuert werden soll.

Die Aufgabe der vorliegenden Erfindung bestand darin, einen Gewindeträger bereitzustellen, der eines oder mehrere der oben genannten Probleme löst. Insbesondere sollte der Gewindeträger einfach handhabbar sein, eine hohe Festigkeit und Steifigkeit aufweisen und zur Befestigung von Komponenten auf dem Dach eines Schienenfahrzeugs geeignet sein.

Zur Lösung schlägt die Erfindung einen Gewindeträger, einen Schienenfahrzeugwagen und ein Verfahren vor, wie in den unabhängigen Ansprüchen angegeben. Spezielle Ausgestaltungen davon sind in den Unteransprüchen angegeben.

In einem Aspekt betrifft die Erfindung einen Gewindeträger, aufweisend
- einen Halteblock, aufweisend eine Öffnung mit nicht rotationssymmetrischer Kontur,
- eine Schraubenmutter, die eine zur Öffnung des Halteblocks komplementäre Außenkontur hat und die formschlüssig und gegen den Halteblock nicht verdrehbar in die Öffnung des Halteblocks eingesetzt ist,
- eine Umfassung für den Halteblock, in welche der Halteblock mit einer darin eingesetzten Schraubenmutter eingesetzt ist, wobei in die Schraubenmutter eine Schraube eindrehbar ist und der Halteblock bei einer Drehbewegung um die Längsachse der Schraube an der Umfassung anschlägt, und welche eine Öffnung aufweist, durch welche die Schraubenmutter zwecks Eindrehen einer Schraube
zugänglich ist.
wobei der Halteblock mit einer darin eingesetzten Schraubenmutter aus der Umfassung (9) entnehmbar ist, und die Umfassung die Form einer Röhre oder Kammer mit mehreckigem Querschnitt hat, und die Röhre oder Kammer zwei gegenüberliegende Einschuböffnungen aufweist, durch welche der Halteblock in die Umfassung einführbar ist oder aus der Umfassung entnehmbar ist, und wobei die Umfassung den Halteblock mit Ausnahme zweier gegenüberliegender Seiten und mit Ausnahme der Öffnung, durch welche die Schraubenmutter zugänglich ist, umschließt, sodass der Halteblock aus der Umfassung durch Verschieben entnehmbar ist.

Der Gewindeträger ist eine Anordnung, in welche eine Schraube eingedreht werden kann und die sich beim Eindrehen einer Schraube nicht in Drehrichtung der Schraube mit dreht. Mit der Schraube kann ein Teil, beispielsweise ein Bauteil eines Schienenfahrzeugs, an dem Gewindeträger befestigt werden. Ein Vorteil der Erfindung liegt darin, dass der Halteblock an unzugänglichen Stellen eingesetzt werden kann, an denen eine Gegenmutter schwer gekontert werden kann, und dass er dort von der Umfassung gehalten wird.

Der Gewindeträger bewirkt, dass beim Eindrehen einer Schraube in die Schraubenmutter, die hier definitionsgemäß ein Teil des Gewindeträgers ist, ein Mitdrehen der Schraubenmutter beim Anziehen der Schraube verhindert wird. Die Mutter wird von dem Halteblock gehalten und der Halteblock wird seinerseits in der Umfassung gehalten. Beim Eindrehen einer Schraube in die Mutter wird ein auf die Mutter ausgeübtes Drehmoment auf den Halteblock übertragen. Der Halteblock schlägt wiederum gegen die Umfassung, sodass eine Umdrehung des Halteblocks und der darin befindlichen Mutter verhindert wird. Der Halteblock kann in der Umfassung mehr oder weniger Bewegungsspiel haben. Das Spiel ist aber höchstens so groß, dass der Halteblock bei einer Drehbewegung um die Längsachse einer in die Schraubenmutter eingedrehten Schraube an der Umfassung anschlägt, sodass eine Umdrehung des Halteblockes und der Mutter verhindert wird. Spezielle Ausführungsformen eines Halteblocks werden an anderer Stelle dieser Beschreibung angegeben.

Ein Vorteil des Gewindeträgers der vorliegenden Erfindung ist, dass nach einem Lösen der Verschraubung aus Sicherheitsgründen nur eine Mutter und eine Schraube getauscht werden müssen, nicht aber der Halteblock. Dadurch wird eine Material- und Kosteneinsparung erzielt.

In einen Halteblock und einem Gewindeträger der vorliegenden Erfindung können Muttern beliebiger Festigkeitsklassen eingesetzt werden, was bei Nutensteinen nicht der Fall ist. Zudem können auf einen erfindungsgemäßen Halteblock und Gewindeträger hohe Drehmomente aufgebracht werden, ohne dass er beschädigt wird, beispielsweise durch irreversible Verformung. Dies gilt insbesondere dann, wenn der Halteblock aus massivem Metall oder aus Stein gefertigt ist.

In einer Ausführungsform eines Gewindeträgers ist die in den Halteblock eingesetzte Schraubenmutter benachbart zur Umfassung und benachbart zur Öffnung in der Umfassung, durch welche die Schraubenmutter zwecks Eindrehen einer Schraube zugänglich ist, angeordnet, sodass beim Festziehen der Schraube die Mutter gegen die Umfassung gepresst wird, und nicht in Längsrichtung der Schraube gegen den Halteblock gepresst wird. Der Funktionsmechanismus kann folgendermaßen beschrieben werden: Bei Verwendung des Gewindeträgers wird eine Schraube durch die Öffnung in der Umfassung geführt und in die auf der anderen Seite der Öffnung befindliche Mutter, welche in den Halteblock eingesetzt ist, eingedreht. Bei Drehen der Schraube dreht sich der Halteblock zunächst mit und schlägt gegen die Umfassung, wie oben ausgeführt. Beim Festziehen der Schraube wird die Mutter gegen die Umfassung gezogen und kommt an der Umfassung, bzw. am Rand des Loches in der Umfassung, zum Liegen. Dabei kann die Mutter etwas aus dem Halteblock herausgezogen werden, wenn die Umfassung, der Halteblock und Mutter so dimensioniert sind, dass zwischen der Mutter und der Umfassung (im nicht angezogenen Zustand der Schraube) ein Spalt gebildet ist und der Halteblock und die Mutter mit entsprechendem Spiel in die Umfassung eingesetzt sind. Die Schraubenmutter ist in diesem Fall zwar formschlüssig und gegen den Halteblock nicht verdrehbar in die Öffnung des Halteblocks eingesetzt, aber sie kann aus dem Halteblock beim Anziehen der Schraube etwas heraus gezogen werden, ohne den Halteblock ganz zu verlassen. Zwischen der Schraubenmutter und der Umfassung können gegebenenfalls Unterlegmaterialen, insbesondere rutschhemmende Materialien, angeordnet sein, z.B. Gummielemente, die vorzugsweise entweder mit der Mutter oder der Umfassung fest verbunden sind.

Nutensteine aus dem Stand der Technik, wie z.B. DE 29713008 U1, werden auf andere Art und Weise verwendet. Sie werden auf Zug belastet, wenn sie in eine Nut oder C-Schiene eingesetzt werden. Bei der vorangehend beschriebenen Ausführungsform der vorliegenden Erfindung ist das Wirkprinzip anders. Der Halteblock dient lediglich dazu, eine Drehung der Schraubenmutter zu verhindern, da er an die Umfassung, in die er eingeschoben ist, anschlägt. Auf den Halteblock wird zu Beginn des Festziehens der Schraube ein Drehmoment aufgebracht, dass im Verlauf des Festziehens vermindert wird, wenn die eingesetzte Mutter an der Umfassung anliegt und vorwiegend bereits durch die Reibung zwischen der Mutter und der Umfassung eine Verdrehung der Mutter verhindert wird. Somit verhindert der Halteblock im Wesentlichen eine Verdrehung der Mutter zu Beginn des Anziehens der Schraube. Der Haltblock wird in dieser Ausführungsform in Schraubenlängsrichtung weder auf Zug belastet, wie es bei Nutensteinen aus dem Stand der Technik der Fall ist, noch auf Druck belastet. Der Halteblock kann daher aus einem weniger festen Material sein, als ein Nutenstein.

Der Halteblock mit einer darin eingesetzten Schraubenmutter ist aus der Umfassung wieder entnehmbar. Dadurch kann der Halteblock und die darin eingesetzte Mutter leicht ausgetauscht werden. Der Begriff "entnehmbar" bedeutet in diesem Zusammenhang, dass der Halteblock mit einer darin eingesetzten Schraubenmutter aus der Umfassung entnommen werden kann, ohne dass dafür die Umfassung in ihrer Form verändert werden muss, beispielsweise durch Aufbiegen. Die Entnehmbarkeit ist somit möglich ohne dass die Umfassung verändert oder zerstört werden muss.

Der Halteblock ist in die Umfassung eingeschoben bzw. in die Umfassung einschiebbar. Die Umfassung umschließt den Halteblock mit Ausnahme zweier gegenüberliegender Seiten, sodass der Halteblock in die Umfassung einschiebbar ist und auch aus der Umfassung durch Verschieben wieder entnehmbar ist. Ferner umschließt die Umfassung den Halteblock mit Ausnahme der Öffnung, oder der Öffnungen, durch welche die Schraubenmutter zwecks Eindrehen der Schraube zugänglich ist. Eine oder mehrere Einschuböffnungen in der Umfassung zum Einschieben des Halteblocks und eine Öffnung zur Einführung der Schraube sind vorzugsweise an verschiedenen Seiten der Umfassung angeordnet. Die Längsachse einer in den Gewindeträger eingedrehten Schraube ist insbesondere quer, am meisten bevorzugt senkrecht, zur Einschubrichtung des Halteblocks in die Umfassung.

In einer Ausführungsform, welche die vorangehend beschriebene weiterbildet, hat der Halteblock einen mehreckigen Querschnitt, insbesondere einen rechteckigen Querschnitt, und die Umfassung hat zwei komplementär oder im Wesentlichen komplementär geformte Öffnungen. Die Umfassung hat einen mehreckigen, insbesondere rechteckigen, Querschnitt, in die ein komplementär geformter Halteblock mit einer in ihn eingesetzten Mutter eingeschoben werden kann. Die Umfassung hat die Form einer Röhre oder Kammer mit mehreckigem, insbesondere rechteckigem Querschnitt, wobei die Röhre/Kammer zwei gegenüber liegende Öffnungen zur Einführung (bzw. zur Entnahme) eines Halteblocks aufweist. Der Halteblock wird soweit in die Umfassung geschoben, bis das Gewindeloch der Mutter und diejenige Öffnung in der Umfassung, durch welche die Schraubenmutter zwecks Eindrehen einer Schraube zugänglich ist, zur Deckung gebracht sind. In einer speziellen Variante sind der Halteblock und die Umfassung gleich lang oder im Wesentlichen gleich lang, wobei die Länge in Einschub-Richtung gemeint ist. Der Halteblock wird in die Umfassung eingeschoben, bis die Ränder der Umfassung und die Ränder des Halteblocks zueinander bündig oder im Wesentlichen zueinander bündig sind, was auf einfache Weise manuell erfolgen kann. Die Öffnung in der Umfassung ist so angeordnet, dass bei bündiger Lage des Halteblocks in der Umfassung die Öffnung der Mutter im Halteblock und die Öffnung in der Umfassung zur Deckung gebracht sind. Da die bündige Lage manuell leicht kontrolliert werden kann, ist eine Positionierung des Halteblocks besonders einfach, insbesondere an schlecht zugänglichen oder schlecht einsehbaren Stellen.

In einer Ausführungsform eines Gewindeträgers ist die Öffnung in dem Halteblock, worin die Mutter einsetzbar ist, eine durchgängige Öffnung, und die Umfassung weist Öffnungen zu beiden Seiten des Halteblocks und der Schraubenmutter auf, wobei die Öffnungen axial fluchtend entlang der Längsachse einer Schraube sind, welche die Umfassung, die Schraubenmutter und den Halteblock durchdringt. Wenn der Halteblock eine durchgängige Öffnung zum Einsetzen einer Mutter aufweist, können Schrauben verwendet werden, die aufgrund ihrer Länge nach Eindrehen in die Mutter den Halteblock durchdringen. In dieser Ausführungsform weist auch die Umfassung eine weitere Öffnung auf, damit die Schraube auch die Umfassung durchdringen kann. D.h. die Umfassung weist in dieser Ausführungsform eine Öffnung zu beiden Seiten des Halteblocks und der Mutter auf, wobei die Öffnungen axial fluchtend entlang einer Schraubenlängsachse sind, sodass die Schraube die in den Halteblock eingesetzte Mutter, den Halteblock und die Umfassung durchdringen kann.

In einer speziellen weiteren Ausführungsform ist die Schraubenmutter aus dem Halteblock wieder entnehmbar. Diese Ausführungsform ist besonders vorteilhaft, wenn auch der Halteblock aus seiner Umfassung entnehmbar ist. Bei einer durchgehenden Öffnung im Halteblock weist die Schraubenmutter vorzugsweise an einer Seite einen seitlich überstehenden Kragen auf, der nach Einsetzen der Schraubenmutter in den Halteblock auf der Oberfläche des Halteblocks aufliegt, sodass die Schraubenmutter nicht durch die Öffnung des Halteblocks rutscht.

Die Umfassung kann Elemente aufweisen, mit denen sie an einem Untergrund befestigt werden kann, beispielsweise durch Schrauben, Kleben, Nieten, Stecken oder Schweißen. Die Umfassung kann beispielsweise Laschen mit Bohrungen aufweisen, die an einem Untergrund verschraubt werden können. Die Umfassung kann auch Arme aufweisen, die an einem Untergrund angeschweißt werden können. Beliebige Varianten dazu sind denkbar.

Die Erfindung offenbart ferner einen Halteblock für eine Schraubenmutter, aufweisend eine Öffnung mit nicht rotationssymmetrischer Kontur, in die eine Schraubenmutter mit komplementärer Außenkontur formschlüssig und gegen den Halteblock nicht verdrehbar einsetzbar ist. Der Halteblock ist als Komponente eines vorangehend beschriebenen Gewindeträgers verwendbar und alle nachfolgend beschriebenen Ausführungsformen eines Halteblocks sind entsprechend in einem Gewindeträger verwendbar.

Vorzugsweise hat bei dem Halteblock die Öffnung zur Aufnahme der Schraubenmutter eine mehreckige Kontur, insbesondere eine sechseckige Kontur zur Aufnahme sechseckiger Schraubenmuttern. Die Öffnung kann durchgehend sein oder nicht durchgehend, wobei eine durchgehende Öffnung den Vorteil hat, dass Schrauben verwendet werden können, die aufgrund ihrer Länge nach Eindrehen in die Mutter den Halteblock durchdringen.

Besonders bevorzugt besteht der Halteblock aus Metall oder Stein. Ferner hat der Halteblock vorzugsweise die Form eines Quaders oder Würfels. Die Ecken und Kanten des Halteblocks sind vorzugsweise abgerundet.

In einem weiteren Aspekt offenbart die Erfindung eine Anordnung, aufweisend
- einen Halteblock, wie zuvor beschrieben,
- eine Schraubenmutter, die eine zur Öffnung des Halteblocks komplementäre Außenkontur hat und die formschlüssig und gegen den Halteblock nicht verdrehbar in die Öffnung des Halteblocks eingesetzt ist.

Die Schraubenmutter ist vorzugsweise aus dem Halteblock wieder entnehmbar. Dazu wird die Dimensionierung der Öffnung im Halteblock entsprechend gewählt. Die Öffnung im Halteblock kann durchgehend sein oder nicht durchgehend. Bei einer durchgehenden Öffnung weist die Schraubenmutter vorzugsweise an einer Seite einen seitlich überstehenden Kragen auf, der nach Einsetzen der Schraubenmutter in den Halteblock auf der Oberfläche des Halteblocks aufliegt, sodass die Schraubenmutter nicht durch die Öffnung des Halteblocks rutscht.

Auch diese Anordnung ist in dem zuvor beschriebenen Gewindeträger verwendbar.

In einem weiteren Aspekt betrifft die Erfindung auch einen Schienenfahrzeugwagen, der einen oder mehrere Gewindeträger wie zuvor beschrieben aufweist. Insbesondere sind die Gewindeträger im Bereich des Daches eines Schienenfahrzeugwagens angeordnet.

Die Erfindung betrifft somit auch einen Schienenfahrzeugwagen, auf dessen Dach ein oder mehrere Gewindeträger wie zuvor beschrieben angeordnet sind, wobei die Gewindeträger zum Befestigen von Dachkomponenten vorgesehen sind. Die Gewindeträger können somit vorzugsweise zur Befestigung von Komponenten auf dem Dach dienen, insbesondere in einem Flachdachbereich. Bevorzugte Komponenten sind austauschbare Komponenten. Insbesondere handelt es sich auch um Komponenten mit einer Masse, zu deren sicherer Befestigung Schrauben und Muttern einer hohen Festigkeitsklasse erforderlich sind. Beispiele für Komponenten sind Klimaanlagen, Dachstromabnehmer, Energiespeicher oder Antriebseinrichtungen.

Die Erfindung betrifft auch ein Verfahren zum Befestigen von Komponenten auf dem Dach eines Schienenfahrzeugs, bei dem
- im Bereich des Daches des Schienenfahrzeugs einer oder mehrere Gewindeträger wie zuvor beschrieben angeordnet und dort ortsfest befestigt werden, und
- an dem/den Gewindeträger(n) eine oder mehrere Dachkomponenten befestigt werden.

Die Befestigung des Gewindeträgers im Bereich des Daches kann beispielsweise durch Schweißen, Nieten, Stecken, Schrauben oder Kleben erfolgen, wobei vorzugsweise die Umfassung des Gewindeträgers im Bereich des Daches, vorzugsweise auf dem Dach, befestigt wird. Vorzugsweise wird die Umfassung an einem tragenden Bereich des Daches befestigt, insbesondere an einem Dachträger.

Insbesondere wird bei dem Verfahren
- eine Umfassung wie in Anspruch 1 genannt im Bereich des Daches befestigt,
- eine Schraubenmutter in die Öffnung eines Halteblocks formschlüssig und gegen den Halteblock nicht verdrehbar eingesetzt, wobei der Halteblock eine Öffnung mit nicht rotationssymmetrischer Kontur aufweist und die Schraubenmutter eine zu der Öffnung komplementäre Außenkontur aufweist,
- der Halteblock mit der darin eingesetzten Schraubenmutter in die Umfassung eingesetzt, sodass das Gewindeloch der Schraubenmutter mit der Öffnung der Umfassung zur Deckung gebracht ist, und die Umfassung den Halteblock mit Ausnahme zweier gegenüberliegender Seiten umschließt, wodurch der Gewindeträger bereitgestellt wird,
- eine Dachkomponente mit einer Schraube an dem Gewindeträger befestigt wird, indem die Schraube in die Schraubenmutter eingedreht und festgezogen wird, wobei der Halteblock bei einer Drehbewegung um die Längsachse der Schraube an der Umfassung anschlägt.

Zum Auseinanderbau der durch das Verfahren erhaltenen Konstruktion kann in umgekehrter Reihenfolge verfahren werden.

Das vorangehend beschriebene Verfahren kann sich auf einen oder eine Mehrzahl Umfassungen, Schraubenmuttern, Halteblöcke, Schrauben und Gewindeträger beziehen. Des Weiteren bezieht sich das Verfahren auf alle in dieser Beschreibung und den Ausführungsbeispielen beschriebenen Halteblöcke, Anordnungen und Gewindeträger.

Nachfolgend wird die Erfindung anhand spezieller Ausführungsformen beschrieben. Es zeigen
- Fig. 1: einen Halteblock
- Fig. 2: einen Anordnung aus Halteblock mit eingesetzter Mutter
- Fig. 3: eine Umfassung für einen Halteblock
- Fig. 4: einen zusammengebauten Gewindeträger
- Fig. 5a-c: einen Gewindeträger, an dem ein Teil mit einer Schraube befestigt ist in verschiedenen Perspektiven
- Fig. 6: die Bewegung eines Halteblocks in seiner Umfassung beim Anziehen einer Schraube

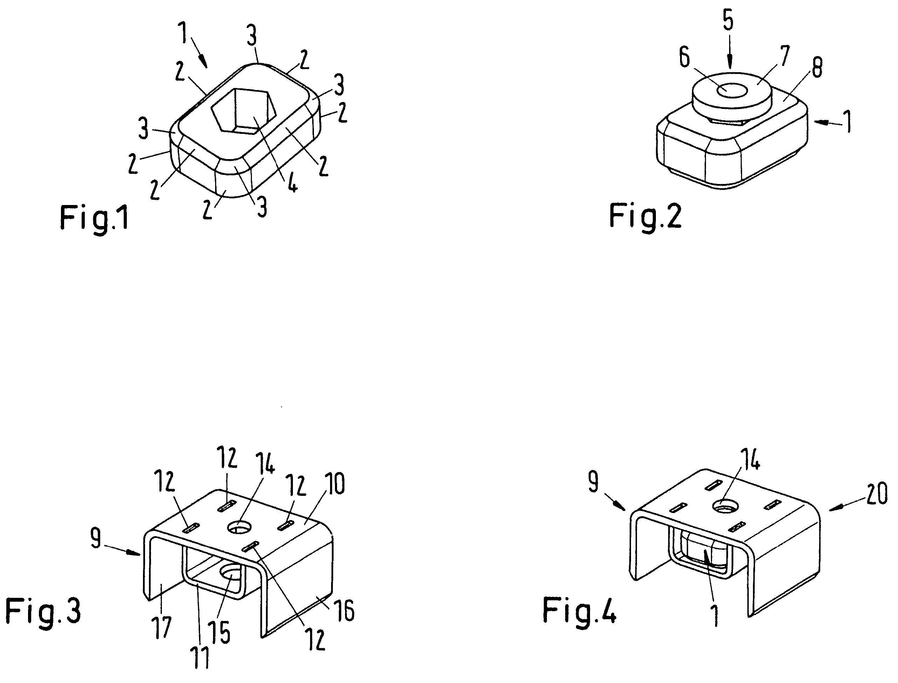

Fig. 1 zeigt einen quaderförmigen Halteblock 1, gefertigt aus Stein, mit abgerundeten Kanten 2 und Ecken 3. Der Halteblock weist eine nicht rotationssymmetrische, sechseckige Öffnung 4 auf, die durchgehend ist. Die Fig. 2 zeigt eine in die Öffnung 4 eingeführte sechseckige Schraubenmutter 5. Die Mutter 5 ist formschlüssig und gegen den Halteblock 1 nicht verdrehbar in die Öffnung 4 des Halteblocks eingesteckt. In das Loch 6 mit Innengewinde kann eine Schraube eingedreht werden. Die Schraubenmutter 5 weist an einer Seite einen seitlich überstehenden Kragen 7 auf, der im Gegensatz zum sechseckigen Mutterunterteil eine kreisförmige Kontur hat. Der Kragen 7 liegt nach Einsetzen der Schraubenmutter 5 in den Halteblock 1 auf der Oberfläche 8 des Halteblocks 1 auf, sodass sie nicht durch die Öffnung 4 des Halteblocks 1 rutscht. Die Steckverbindung zwischen Halteblock 1 und Schraubenmutter 5 ist wieder lösbar, so dass die Schraubenmutter durch Herausziehen nach oben aus dem Halteblock entnommen werden kann.

Fig. 3 zeigt eine Umfassung 9, in die eine Anordnung nach Fig. 4 eingesetzt werden kann. Die Umfassung ist aus zwei unterschiedlich großen U-Profilstücken 10, 11 zusammengesetzt. Das kleinere U-Profil 11 ist mit Laschen (nicht sichtbar) in Ausnehmungen 12 des größeren U-Profils 10 eingeklemmt. Zusammen bilden die beiden U-Profile 10, 11 einen Raum 13 mit rechteckigem Querschnitt, der an zwei gegenüberliegenden Seiten Öffnungen aufweist. Die Umfassung weist zwei axial fluchtende Öffnungen 14, 15 auf. Die Umfassung 9 kann mit den seitlichen Schenkeln 16, 17 des großen U-Profils 10 auf einem Untergrund befestigt werden, beispielsweise durch Stecken oder Schweißen.

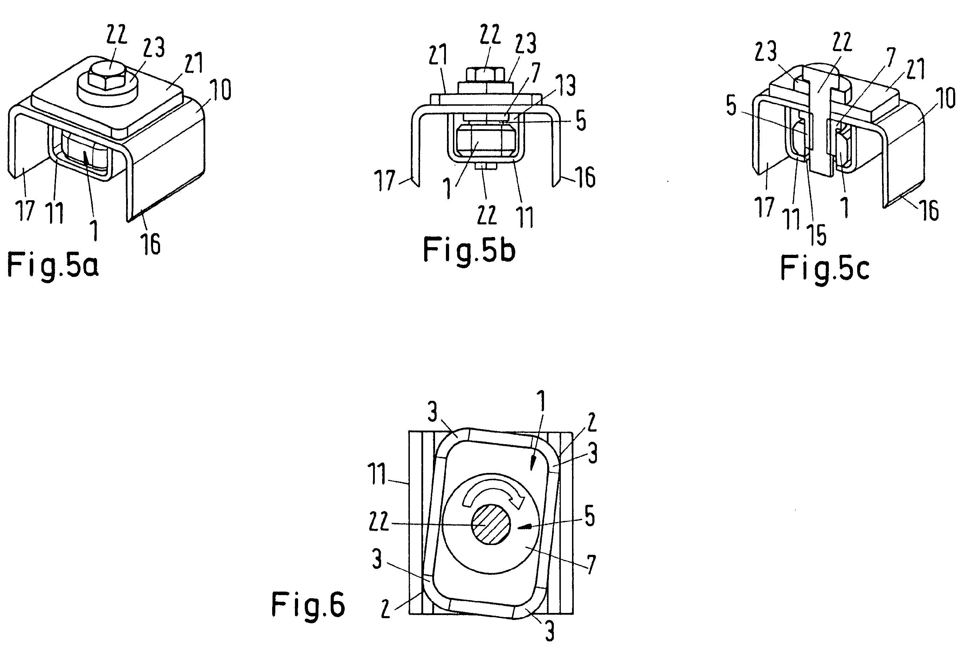

Die Fig. 4 zeigt einen zusammengebauten Gewindeträger 20, zusammengesetzt aus einer Umfassung 9 gemäß Fig. 3 und einer Anordnung aus Halteblock 1 und Schraubenmutter 5 gemäß Fig. 2. Die Anordnung aus Halteblock 1 und Schraubenmutter 5 wurde seitlich durch eine ihrer Öffnungen soweit in den Raum 13 geschoben, bis das Gewindeloch 6 der Schraubenmutter 5 mit der Öffnung 14 der Umfassung 9 zur Deckung gebracht ist. In der gezeigten Ausführungsform ist die in den Halteblock 1 eingesetzte Schraubenmutter 5 benachbart zur Öffnung 14 in der Umfassung 9 angeordnet, wie auch in der seitlichen Ansicht der Fig. 5b und 5c zu sehen.

In den Fig. 5a-5c ist ein zu verschraubendes Teil 21 auf den Gewindeträger aufgelegt und mit einer Schraube 22 an dem Gewindeträger festgeschraubt. Zwischen der Schraube 22 und dem Teil 21 ist eine Unterlegscheibe 23 angeordnet. Die Schraube 22 durchdringt sowohl den Halteblock 1 und auch die Umfassung, wobei sie die Umfassung durch die Öffnung 15 wieder verlässt. In der Fig. 5a und 5b ist besonders gut zu sehen, wie der Halteblock 1 und die Mutter 5 in die rechteckige Röhre der Umfassung geschoben sind, die aus den U-Profilen 10 und 11 gebildet sind. Ebenso, wie Halteblock und Mutter eingeschoben wurden, können sie, nach Entfernung der Schraube 22, manuell auch wieder entnommen werden, indem man sie zur Seite in Richtung einer der Öffnungen des Raumes 13 bewegt. In Fig. 5b ist zu erkennen, dass der Halteblock 1 mit etwas Spiel zur Seite in dem Raum 13 der Umfassung gelagert ist.

In der Fig. 6 ist in einer Draufsicht auf den Gewindeträger dargestellt, wie sich der Halteblock 1 beim Festziehen der Schraube innerhalb des Raumes 13 der Umfassung 9 bewegt. Von der Umfassung ist nur das kleinere U-Profil 11 gezeigt. Der Halteblock 1 ist mit etwas Spiel in der aus kleinem und großem U-Profil 10, 11 gebildeten Röhre gelagert. Beim Anziehen der Schraube 22, die im Querschnitt zu sehen ist, in der Mutter 5 in Pfeilrichtung dreht sich der Halteblock in Pfeilrichtung mit, bis er mit zwei diagonal gegenüberliegenden Ecken 3 und Kanten 2 an dem U-Profil 11 anschlägt, wodurch eine weitere Drehung verhindert wird. Beim weiteren Anziehen wird die Mutter 5 gegen die Umfassung 9 gepresst und die Reibkraft zwischen Mutter 5 und Umfassung 9 nimmt das aufgebrachte Drehmoment der Schraube 22 auf. Wenn zwischen dem Kragen 7 der Mutter 5 und der Umfassung 9 ein Spalt vorhanden ist, wird die Mutter beim Anziehen der Schraube 22 etwas aus dem Halteblock 1 herausgezogen bis sie mit dem Kragen 7 an der Umfassung anliegt.

## Patentansprüche

1. Gewindeträger, aufweisend
- einen Halteblock (1), aufweisend eine Öffnung (4) mit nicht rotationssymmetrischer Kontur,
- eine Schraubenmutter (5), die eine zur Öffnung (4) des Halteblocks komplementäre Außenkontur hat und die formschlüssig und gegen den Halteblock (1) nicht verdrehbar in die Öffnung (4) des Halteblocks eingesetzt ist,
- eine Umfassung (9) für den Halteblock, in welche der Halteblock mit einer darin eingesetzten Schraubenmutter (5) eingesetzt ist, wobei in die Schraubenmutter (5) eine Schraube (22) eindrehbar ist und der Halteblock bei einer Drehbewegung um die Längsachse der Schraube (22) an der Umfassung anschlägt, und welche eine Öffnung (14) aufweist, durch welche die Schraubenmutter (5) zwecks Eindrehen einer Schraube (22) zugänglich ist,
wobei der Halteblock mit einer darin eingesetzten Schraubenmutter (5) aus der Umfassung (9) entnehmbar ist, und
die Umfassung die Form einer Röhre oder Kammer mit mehreckigem Querschnitt hat, und die Röhre oder Kammer zwei gegenüberliegende Einschuböffnungen aufweist, durch welche der Halteblock in die Umfassung einführbar ist oder aus der Umfassung entnehmbar ist,
**dadurch gekennzeichnet, dass**
die Umfassung (9) den Halteblock mit Ausnahme zweier gegenüberliegender Seiten und mit Ausnahme der Öffnung (14), durch welche die Schraubenmutter (5) zugänglich ist, umschließt, sodass der Halteblock aus der Umfassung durch Verschieben entnehmbar ist.

2. Gewindeträger nach Anspruch 1, bei dem die Schraubenmutter (5) benachbart zur Öffnung (14) in der Umfassung (9), durch welche die Schraubenmutter (5) zwecks Eindrehen einer Schraube (22) zugänglich ist, angeordnet ist.

3. Gewindeträger nach einem der vorangehenden Ansprüche, bei dem der Halteblock (1) und die Umfassung (9) in Einschubrichtung gleich lang oder im Wesentlichen gleich lang sind, sodass bei Einschieben des Halteblocks in die Umfassung die Ränder der Umfassung und die Ränder des Halteblocks in eine zueinander bündige oder im Wesentlichen zueinander bündige Lage bringbar sind.

4. Gewindeträger nach einem der vorangehenden Ansprüche, bei dem die Öffnung (4) des Halteblocks (1) eine durchgängige Öffnung ist, und die Umfassung (9) eine weitere Öffnung (15) aufweist und die Öffnungen (14, 15) in der Umfassung (9) zu beiden Seiten des Halteblocks und der Schraubenmutter (5) angeordnet sind, wobei die Öffnungen (14, 15) in der Umfassung (9) axial fluchtend entlang der Längsachse einer die Umfassung (9), die Schraubenmutter (5) und den Halteblock (1) durchdringenden Schraube (22) sind.

5. Gewindeträger nach einem der vorangehenden Ansprüche, bei dem die Schraubenmutter (5) an einer Seite einen seitlich überstehenden Kragen (7) aufweist, der nach Einsetzen der Schraubenmutter in den Halteblock (1) auf der Oberfläche (8) des Halteblocks aufliegt, sodass die Schraubenmutter (5) vor dem Einsetzen des Halteblocks in die Umfassung nicht durch die Öffnung des Halteblocks rutscht.

6. Gewindeträger nach einem der vorangehenden Ansprüche, bei dem die Umfassung Elemente zur Befestigung an einem Untergrund aufweist, insbesondere eine oder mehrere Laschen oder Arme zum Anschrauben, Annieten, Anstecken oder Anschweißen.

7. Schienenfahrzeugwagen, aufweisend einen oder mehrere Gewindeträger nach einem der Ansprüche 1 - 6.

8. Schienenfahrzeugwagen nach Anspruch 7, in dessen Dachbereich einer oder mehrere Gewindeträger nach einem der Ansprüche 1 - 6 angeordnet sind, wobei die Gewindeträger zum Befestigen von Dachkomponenten vorgesehen sind.

9. Verfahren zum Befestigen von Komponenten auf dem Dach eines Schienenfahrzeugs, bei dem
- im Bereich des Daches des Schienenfahrzeugs einer oder mehrere Gewindeträger nach einem der Ansprüche 1 - 6 angeordnet und dort mit der Umfassung ortsfest befestigt werden, und
- an dem/den Gewindeträger(n) eine oder mehrere Dachkomponenten befestigt werden.

## Claims

1. A thread carrier, comprising
- a support block (1), exhibiting an opening (4) with rotationally asymmetric contour,
- a screw nut (5), which has a supplementary outer contour to the opening (4) of the support block and is installed in the opening (4) of the support block in a form-fitting and non-rotational manner against the support block (1),
- an enclosure (9) for the support block, in which the support block is implemented with one of the screw nuts (5) installed there, wherein a screw (22) can be screwed into the screw nut (5) and the support block stops at the enclosure with a rotational movement along the longitudinal axis of the screw (22), and which exhibits an opening (14), through which the screw nut (5) is accessible for the purpose of tightening a screw (22),
wherein the said support block with a screw nut (5) installed there can be removed from the enclosure (9), and
the enclosure has the form of a tube or a chamber with a polygonal cross-section, and the tube or chamber exhibits two opposing insertion openings, through which the support block can be inserted into or removed from the enclosure,
**characterized in that**
the enclosure (9) encircles the support block except for two opposing sides and except for the opening (14), through which the screw nut (5) can be accessed, such that the support block can be removed from the enclosure by means of sliding.

2. The thread carrier according to claim 1, wherein the screw nut (5) is positioned next to the opening (14) in the enclosure (9), through which the screw nut (5) is accessible for the purpose of tightening a screw (22).

3. The thread carrier according to one of the preceding claims, wherein the the support block (1) and the enclosure (9) are of the same length in the direction of insertion or have essentially the same length such that upon insertion of the support block into the enclosure the edges of the enclosure and the edges of the support block can be brought in a position where they are flush with one another or are essentially flush with one another.

4. The thread carrier according to one of the preceding claims, wherein the opening (4) of the support block (1) is a continuous opening, and the enclosure (9) exhibits another opening (15) and the openings (14, 15) are arranged in the enclosure (9) on both sides of the support block and the screw nut (5), wherein the openings (14, 15) in the enclosure (9) are axially aligned along the longitudinal axis of a screw (22) penetrating the enclosure (9), the screw nut (5) and the support block (1).

5. Thread carrier according to one of the preceding claims, wherein the screw nut (5) exhibits on one side a laterally projecting collar (7), which rests on the surface (8) of the support block after insertion of the screw nut in the support block (1) such that the screw nut (5) does not slide through the opening of the support block prior to insertion of the support block into the enclosure.

6. The thread carrier according to one of the preceding claims, wherein the enclosure exhibits elements for fastening to a substrate, especially one or more lugs or arms for screwing, riveting, pinning or welding.

7. Rail vehicle, exhibiting one or more thread carriers according to one of the claims 1 - 6.

8. Rail vehicle according to claim 7, in the roof area of which one or more thread carriers according to claims 1 - 6 are arranged, wherein the thread carriers are intended for fastening of roof components.

9. A method for fastening components on the roof of a rail vehicle, wherein
- in the area of the roof of the rail vehicle one or more thread carriers according to one of the claims 1 - 6 are arranged and are fastened there with the enclosure in a fixed manner, and
- one or more roof components are fastened on the thread carrier(s).

## Revendications

1. Support fileté présentant
- un bloc de retenue (1) présentant une ouverture (4) avec un contour qui n'est pas symétrique en rotation,
- un écrou (5) qui a un contour extérieur complémentaire à l'ouverture (4) du bloc de retenue et qui est inséré à complémentarité de formes et contre le bloc de retenue (1) de manière non rotative dans l'ouverture (4) du bloc de retenue,
- une enceinte (9) pour le bloc de retenue, dans lequel le bloc de retenue est inséré avec un écrou (5) inséré dedans, une vis (22) étant serrée dans l'écrou (5) et le bloc de retenue butant lors d'un mouvement rotatif autour de l'axe longitudinal de la vis (22) contre l'enceinte, et qui présente une ouverture (14), par laquelle l'écrou (5) est accessible en vue du serrage d'une vis (22),
le bloc de retenue avec un écrou (5) inséré dedans étant retirable hors de l'enceinte (9) et
l'enceinte a la forme d'un tube ou d'une chambre avec une section transversale polygonale et le tube ou la chambre présente deux ouvertures d'enfichage opposées, par lesquelles le bloc de retenue peut être introduit dans l'enceinte ou peut être retiré d'enceinte,
**caractérisé en ce que**
l'enceinte (9) entoure le bloc de retenue à l'exception de deux côtés en regard et à l'exception de l'ouverture (14), par laquelle l'écrou de vis (5) est accessible de sorte que le bloc de retenue puisse être retiré de l'enceinte par déplacement.

2. Support fileté selon la revendication 1, dans lequel l'écrou (5) est agencé de manière contiguë à l'ouverture (14) dans l'enceinte (9), par laquelle l'écrou (5) est accessible en vue du serrage d'une vis (22).

3. Support fileté selon l'une quelconque des revendications précédentes, dans lequel le bloc de retenue (1) et l'enceinte (9) sont de même longueur ou sensiblement identique dans le sens d'enfoncement de sorte que lors de l'enfoncement du bloc de retenue dans l'enceinte, les bords de l'enceinte et les bords du bloc de retenue puissent être amenés dans une position à fleur l'un à l'autre ou sensiblement à fleur l'un à l'autre.

4. Support fileté selon l'une quelconque des revendications précédentes, dans lequel l'ouverture (4) du bloc de retenue (1) est une ouverture continue, et l'enceinte (9) présente une autre ouverture (15) et les ouvertures (14, 15) dans l'enceinte (9) sont agencées des deux côtés du bloc de retenue et de l'écrou (5), les ouvertures (14, 15) dans l'enceinte (9) étant en alignement axial le long d'un axe longitudinal d'une vis (22) pénétrant l'enceinte (9), l'écrou (5) et le bloc de retenue (1).

5. Support fileté selon l'une quelconque des revendications précédentes, dans lequel l'écrou (5) présente sur un côté un collet (7) dépassant latéralement qui repose après l'insertion de l'écrou dans le bloc de retenue (1) sur la surface (8) du bloc de retenue de sorte que l'écrou (5) ne glisse pas par l'ouverture du bloc de retenue avant l'insertion du bloc de retenue dans l'enceinte.

6. Support fileté selon l'une quelconque des revendications précédentes, dans lequel l'enceinte présente des éléments pour la fixation sur un sous-sol, en particulier une ou plusieurs languettes ou bras pour le vissage, rivetage, enfichage ou soudage.

7. Véhicule sur rail présentant un ou plusieurs supports filetés selon l'une quelconque des revendications 1 à 6.

8. Véhicule sur rail selon la revendication 7, dans la zone de toit duquel un ou plusieurs supports filetés selon l'une quelconque des revendications 1 à 6 sont agencés, les supports filetés étant prévus pour la fixation de composants de toit.

9. Procédé de fixation de composants sur le toit d'un véhicule sur rail, dans lequel
- un ou plusieurs supports filetés selon l'une quelconque des revendications 1 à 6 sont agencés dans la zone du toit du véhicule sur rail et y sont fixés à demeure avec l'enceinte et
- un ou plusieurs composants de toit sont fixés sur le/les support (s) fileté(s).
